Europäisches Patentamt

(19) European Patent Office

Office européen des brevets

(11) Numéro de publication : **0 052 347**
**B1**

(12) **FASCICULE DE BREVET EUROPÉEN**

(45) Date de publication du fascicule du brevet :
05.09.84

(51) Int. Cl.³ : **H 04 M   1/10**

(21) Numéro de dépôt : **81109647.8**

(22) Date de dépôt : **12.11.81**

(54) **Poste téléphonique comportant un préamplificateur à courant porteur, un interrupteur de coupure de micro et un dispositif de signalisation de cette coupure.**

(30) Priorité : **17.11.80 FR 8024599**

(43) Date de publication de la demande :
**26.05.82 Bulletin 82/21**

(45) Mention de la délivrance du brevet :
**05.09.84 Bulletin 84/36**

(84) Etats contractants désignés :
**AT BE CH DE GB IT LI LU NL SE**

(56) Documents cités :
**CH-A-   341 195**
**GB-A- 1 525 964**

(73) Titulaire : **HORLOGERIE PHOTOGRAPHIQUE FRANÇAISE**
**Le Bouchet**
**F-74130 Bonneville (FR)**

(72) Inventeur : **Montenont, Jean**
**Avenue des Cyclamens**
**F-74130 Bonneville (FR)**

(74) Mandataire : **Modiano, Guido et al**
**MODIANO & ASSOCIATI S.A.S. Via Meravigli, 16**
**I-20123 Milan (IT)**

Jouve, 18, rue St-Denis, 75001 Paris, France

## Description

La présente invention concerne un poste téléphonique à préamplificateur, portant un micro à faible tension de sortie, un interrupteur de coupure de micro et un dispositif pour signaliser la coupure du micro par l'interrupteur.

Les postes téléphoniques usuels comprennent un combiné dans lequel sont insérés un émetteur ou micro et un récepteur, l'émetteur permettant de capter la parole de l'utilisateur pour envoyer un signal sur la ligne et le récepteur permettant de transformer un signal reçu sur la ligne en un signal sonore. Le récepteur et l'émetteur du combiné sont connectés au circuit de transmission se trouvant dans le boîtier du poste par un cordon non blindé et limité à quatre fils conducteurs. Les deux premiers fils conducteurs sont connectés à l'émetteur et les deux autres fils conducteurs sont connectés au récepteur. Le boîtier du poste contient en outre des circuits d'alimentation et des circuits de connexion à la ligne, ainsi que le clavier de numérotation.

Les micros à charbons, généralement utilisés dans les postes actuels, produisent un signal d'amplitude relativement élevée, de sorte que les courants transmis dans les fils conducteurs du cordon ne sont pas perturbés par les parasites et ondes radio environnantes. Par contre, ces micros produisent une qualité de signal très médiocre, la distorsion étant très élevée.

On a essayé de remplacer les micros à charbons par des micros électrodynamiques, ce type de micros produisant une distorsion nettement plus faible. Cependant, le signal produit par ces micros est beaucoup plus faible et nécessite l'utilisation de circuits d'amplification. Ces circuits sont généralement placés dans le boîtier du poste pour en faciliter l'alimentation soit par le secteur soit par la ligne. Le micro se trouve alors séparé de l'amplificateur par le cordon, et l'ensemble forme une antenne capable de capter des ondes parasites et des ondes radio environnantes. Ces ondes étant ensuite amplifiées par les circuits présents dans le boîtier, le résultat obtenu par ces dispositifs est relativement médiocre.

Le poste téléphonique de la présente invention comporte, comme celui décrit dans le brevet CH-A-341195, un ensemble de moyens qui permette, sans nécessiter l'emploi d'un cordon à nombre de fils supérieur à quatre, d'utiliser d'une part un micro électrodynamique sans être sensible aux parasites environnants. L'objet de la présente invention concerne un poste téléphonique comportant un émetteur à faible tension de sortie et un récepteur disposés dans un combiné relié par un cordon à quatre fils conducteurs à un boîtier comportant des moyens d'alimentation et des moyens de connexion à la ligne, le combiné comprenant également un préamplificateur amplifiant le signal de sortie de l'émetteur et connecté aux moyens d'alimentation par l'intermédiaire d'un premier et d'un second fil conducteur, le signal de sortie du préamplificateur étant transmis par ces mêmes fils conducteurs au boîtier, caractérisé en ce qu'il comprend un interrupteur disposé dans le combiné pour interrompre la transmission de signaux par le préamplificateur, et des moyens de signalisation sensibles à la position de l'interrupteur, pour produire un signal perceptible par l'utilisateur lorsque cette transmission est interrompue. Ainsi, les fonctions et les performances du poste peuvent être notablement améliorées tout en permettant l'emploi des cordons normalisés à quatre fils. Selon une autre caractéristique de l'invention, un signal audible dans le récepteur du combiné est produit en cas de coupure du micro.

Pour ce faire, et selon une caractéristique de la présente invention, le poste téléphonique comprend un préamplificateur disposé dans le combiné, amplifiant le signal de sortie de l'émetteur ou micro, et connecté aux moyens d'alimentation par l'intermédiaire de deux fils conducteurs, le signal de sortie du préamplificateur étant transmis par ces mêmes deux fils conducteurs à un organe séparateur de modulation et amplificateur disposé dans le boîtier et connecté aux moyens de connexion à la ligne.

Selon une autre caractéristique de l'invention, le poste téléphonique comporte un interrupteur disposé dans le combiné et connecté en dérivation sur le préamplificateur entre le premier et le second fil conducteur ; il comporte en outre un filtre disposé dans le boîtier et connecté à ces fils conducteurs pour déterminer la tension moyenne présente entre ces conducteurs ; les moyens d'alimentation comportent une impédance interne produisant, lorsque le préamplificateur est connecté, une chute de tension à vide de ces moyens d'alimentation ; des moyens à seuil sont connectés aux bornes de sortie du filtre, et commandent des moyens de signalisation pour produire un signal lorsque l'interrupteur est fermé et coupe les signaux émis par l'émetteur. Les moyens de signalisation peuvent comprendre un générateur de signal électrique dont la sortie est connectée au récepteur du combiné pour produire un signal audible dans ce récepteur.

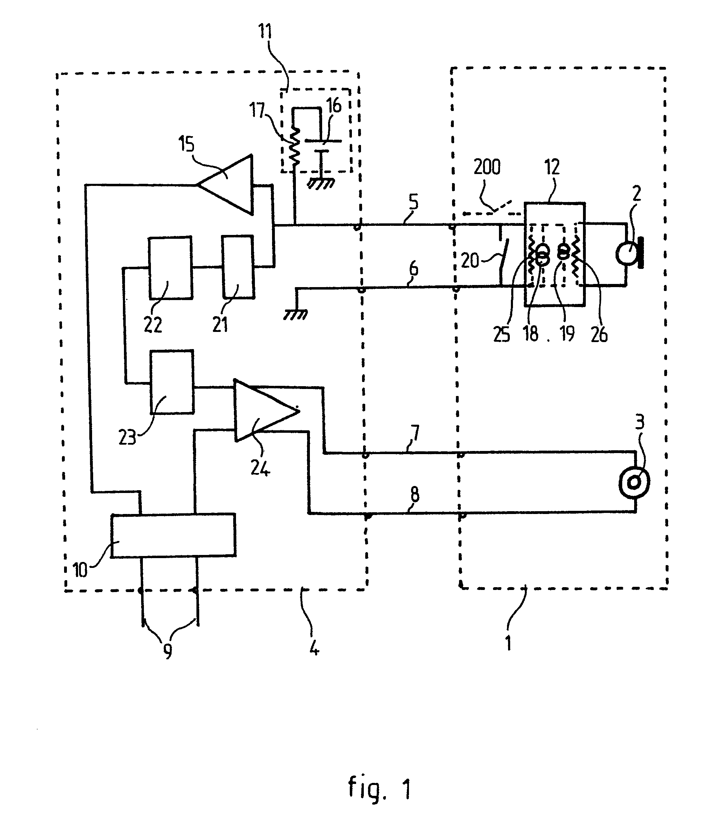

Ces objets, caractéristiques et avantages ainsi que d'autres de la présente invention seront exposés plus en détail dans la description suivante de modes de réalisation particuliers, faite en relation avec la figure jointe représentant de façon schématique le circuit de la présente invention.

Le poste téléphonique de la présente invention comprend, comme le représente la figure, un combiné 1 supportant un émetteur ou micro 2 et un récepteur 3. Le combiné 1 est relié à un boîtier 4 par un cordon de quate fils conducteurs respectivement 5, 6, 7 et 8. Le boîtier 4 est connecté à la ligne 9 et comporte des circuits de connexion à la ligne 10 et des moyens d'alimentation 11 schématiquement représentés.

L'émetteur ou micro 2 est connecté aux bornes d'entrée d'un préamplificateur 12 dont les bornes de sortie sont connectées respectivement aux fils conducteurs 5 et 6. Les bornes de sortie du moyen d'alimentation 11 sont connectés respectivement aux fils conducteurs 5 et 6 de façon à alimenter le préamplificateur 12. Un circuit 15 séparateur de modulation et amplificateur a sa borne d'entrée connectée au fil conducteur 5, et sa borne de sortie connectée à une borne d'entrée du circuit de connexion à la ligne 10. Le préamplificateur 12 amplifie le signal produit par le micro 2, et ce signal amplifié est envoyé sur les fils conducteurs 5 et 6. Ainsi, le poste téléphonique de la présente invention comporte un préamplificateur 12 permettant par sa proximité l'utilisation d'un micro électrodynamique 2 sans nécessiter l'adjonction de fils d'alimentation supplémentaires dans le cordon pour alimenter le préamplificateur 12 à partir des moyens d'alimentation 11.

Le moyen d'alimentation 11 pourra notamment comprendre une source de tension 16 connectée en série avec une résistance 17, de sorte que l'ensemble est équivalent à une source de tension d'impédance non négligeable. Ainsi, les signaux amplifiés par le préamplificateur peuvent être recueillis par le circuit 15 qui les dissocie de la tension d'alimentation et les amplifie.

Le préamplificateur 12 peut être constitué de divers éléments électroniques bien connus dans la technique et présentant, vu de ses bornes de sortie, une impédance interne équivalente à celle d'une source de courant modulée. On a représenté schématiquement sur la figure par exemple une source de courant continu 18 connectée en parallèle sur une impédance interne 25 et sur une source de courant modulé 19. La source de courant 19 représente le signal produit par le micro 2. L'impédance 26, connectée entre les bornes d'entrée du préamplificateur 12, représente son impédance d'entrée. Ce genre d'amplificateur, généralement appelé amplificateur à courant porteur, est couramment utilisé, notamment dans la technique des circuits intégrés, il ne fera donc pas l'objet d'une description détaillée.

Un interrupteur 20, disposé dans le combiné 1, est connecté en parallèle sur les bornes de sortie du préamplificateur 12 entre les fils conducteurs 5 et 6. Cet interrupteur permet à l'utilisateur de court-circuiter le préamplificateur et de couper à la fois l'alimentation de ce préamplificateur et le signal qu'il produit sur ses bornes de sortie. Le fil conducteur 5 est connecté, dans le boîtier 4, à la borne d'entrée d'un filtre 21 dont la borne de sortie est connectée à la borne d'entrée d'un moyen à seuil 22. Le moyen à seuil 22 est destiné à produire un signal sur sa borne de sortie lorsque la tension sur sa borne d'entrée est inférieure à un seuil prédéterminé, ce seuil étant inférieur à la tension moyenne d'alimentation du préamplificateur 12. La borne de sortie du moyen à seuil 22 est connectée à une borne d'entrée d'un générateur de signal 23. La borne de sortie du générateur de signal 23 est connectée à une borne d'entrée d'un amplificateur 24 dont l'autre borne d'entrée est connectée à une borne de sortie du moyen de connexion de ligne 10. Les bornes de sortie de l'amplificateur 24 sont connectées respectivement aux fils conducteurs 7 et 8, eux-même connectés respectivement aux bornes du récepteur 3.

Le fonctionnement du dispositif est le suivant : lorsque l'interrupteur 20 est en position ouverte, les signaux émis par le micro 2 sont amplifiés par le préamplificateur 12 alimenté par les moyens d'alimentation 11. Ces signaux sont transmis par les fils conducteurs 5 et 6, amplifiés par l'amplificateur 15 et transmis à la ligne 9 par le moyen de connexion 10. Le filtre 21 et le moyen à seuil 22 détectent une tension d'alimentation normale entre les fils 5 et 6, le moyen à seuil 22 maintenant l'arrêt du générateur de signaux 23. Les signaux arrivant de la ligne 9 sont transmis par le moyen de connexion 10 à l'amplificateur 24 et envoyés sur le récepteur 3.

Lorsque l'on ferme l'interrupteur 20, la tension entre les deux fils 5 et 6 devient nulle, provoquant d'une part l'envoi d'une tension nulle aux bornes d'entrée de l'amplfiicateur 15 quels que soient les signaux émis par le micro 2, et d'autre part le basculement du moyen à seuil 22. Le signal de sortie émis par le moyen à seuil 22 provoque alors le fonctionnement du générateur de signaux 23 qui émet un signal amplifié par l'amplificateur 24. Le signal sonore produit par le récepteur 3 avertit alors l'utilisateur du bon fonctionnement de l'interrupteur 20.

On pourra bien entendu, sans sortir du cadre de la présente invention, prévoir une position différente de l'interrupteur 20 : cet interrupteur peut en effet être placé non pas en parallèle sur les bornes de sortie du préamplificateur 12 mais en série avec l'une des bornes de sortie, comme le représente en pointillés la figure sous la référence 200. On utilisera alors un moyen à seuil 22 produisant un signal sur sa borne de sortie lorsque la tension sur sa borne d'entrée est supérieure à un seuil prédéterminé, ce seuil étant supérieur à la tension moyenne d'alimentation du préamplificateur 12. Dans ce cas, lorsque l'interruption est en position fermée, le circuit a le même fonctionnement que lorsque l'interrupteur 20 était en position ouverte : la tension entre les fils 5 et 6 est une tension d'alimentation normale et les signaux émis par le micro 2 sont transmis à la ligne sans interruption. Lorsque l'interrupteur 200 est en position ouverte, la tension entre les fils 5 et 6 augmente pour atteindre la tension de la source de tension 16, l'impédance 17 ne produisant alors plus aucune chute de tension. Le moyen à seuil 22 détecte alors une tension d'alimentation plus élevée que la normale et produit un signal pour commander le fonctionnement du générateur de signaux produisant un signal sonore sur le récepteur 3.

Dans le cas d'un interrupteur 20 placé en parallèle ou d'un interrupteur 200 placé en série, le dispositif fonctionne avec un moyen d'alimentation 11 comportant une impédance interne provoquant, lorsque le préamplificateur 12 est connecté entre les fils 5 et 6, une chute de tension aux bornes de ces fils 5 et 6 égale à une fraction de la tension produite à vide par la source de tension 16. On pourra notamment prévoir une résistance 17 de valeur telle que la tension entre les fils 5 et 6 en fonctionnement normal soit égale à la moitié de la tension de la source 16.

La présente invention n'est pas limitée aux modes de réalisation qui ont été explicitement décrits, mais elle inclut diverses variantes et généralisations contenues dans le domaine des revendications ci-après. Ainsi, le générateur de signaux 23, l'amplificateur 24 et le récepteur 3 forment un mode de réalisation particulier du moyen de signalisation permettant de produire un signal perçu par l'utilisateur ; on pourra prévoir d'autres modes de signalisation, tels que des générateurs de signaux optiques ou de signaux sonores disposés dans le boîtier du poste et commandés par les moyens à seuil 22.

## Revendications

1. Poste téléphonique comportant un émetteur (2) à faible tension de sortie et un récepteur (3) disposés dans un combiné (1) relié par un cordon à quatre fils conducteurs (5, 6, 7, 8) à un boîtier (4) comportant des moyens d'alimentation (11) et des moyens de connexion à la ligne (10), le combiné comprenant également un préamplificateur (12) amplifiant le signal de sortie de l'émetteur (2) et connecté aux moyens d'alimentation (11) par l'intermédiaire d'un premier (5) et d'un second (6) fil conducteur, le signal de sortie du préamplificateur étant transmis par ces mêmes fils conducteurs (5, 6) au boîtier (4), caractérisé en ce qu'il comprend un interrupteur (20) disposé dans le combiné pour interrompre la transmission de signaux par le préamplificateur (12), et des moyens de signalisation sensibles à la position de l'interrupteur, pour produire un signal perceptible par l'utilisateur lorsque cette transmission est interrompue.

2. Poste téléphonique selon la revendication 1, caractérisé en ce qu'il comprend un organe séparateur de modulations et amplificateur (15) disposé dans le boîtier (4) et connecté aux moyens de connexion à la ligne (10) et aux fils conducteurs (5, 6).

3. Poste téléphonique selon la revendication 2, caractérisé en ce qu'il comporte les éléments suivants :
— un interrupteur (20) actionnable manuellement, disposé dans le combiné et connecté en dérivation sur le préamplificateur (12) entre le premier (5) et le second (6) fil conducteur ;
— un filtre (21) disposé dans le boîtier est connecté à ces fils conducteurs (5, 6) pour déterminer la tension moyenne présente entre ces conducteurs ;
— des moyens d'alimentation (11) qui comportent une impédance interne (17) produisant, lorsque le préamplificateur est connecté, une chute de tension moyenne entre les deux fils conducteurs (5, 6) égale à une fraction de la tension à vide de ces moyens d'alimentation ;
— des moyens à seuil (22), connectés aux bornes de sortie du filtre (21) et produisant un signal lorsque leur tension d'entrée est inférieure à un seuil prédéterminé ; et
— un moyen de signalisation (23, 24, 3), commandé par les moyens à seuil (22) pour produire un signal perçu par l'utilisateur lorsque les moyens à seuil produisent un signal de sortie.

4. Poste téléphonique selon la revendication 2, caractérisé en ce qu'il comporte les éléments suivants :
— un interrupteur (200) disposé dans le combiné et connecté en série sur une des bornes d'entrée du préamplificateur (12) ;
— un filtre (21) disposé dans le boîtier et connecté aux fils conducteurs (5, 6) pour déterminer la tension moyenne présente entre ces conducteurs ;
— des moyens d'alimentation (11) qui comportent une impédance interne (17) produisant, lorsque le préamplificateur est connecté, une chute de tension moyenne entre les deux fils conducteurs (5, 6) égale à une fraction de la tension à vide de ces moyens d'alimentation ;
— des moyens à seuil (22) connectés aux bornes de sortie du filtre (21) et produisant un signal lorsque leur tension d'entrée est supérieure à un seuil prédéterminé ; et
— un moyen de signalisation (23, 24, 3), commandé par les moyens à seuil pour produire un signal perçu par l'utilisateur lorsque les moyens à seuil produisent un signal de sortie.

5. Poste téléphonique selon l'une des revendications 3 ou 4, caractérisé en ce que l'impédance interne (17) des moyens d'alimentation (11) produit une chute de tension sensiblement égale à la moitié de la t sion à vide.

6. Poste téléphonique selon l'une quelconque des revendications 1 à 5, caractérisé en ce que le préamplificateur (12) est du type « à courant porteur », et est alimenté par des moyens d'alimentation (11) comprenant une source de tension (16) connectée en série avec une résistance (17).

7. Poste téléphonique selon l'une quelconque des revendications 2 à 6, caractérisé en ce que le moyen de signalisation comprend un générateur de signal électrique (23) dont la sortie est connectée au récepteur (3) du combiné (1) pour produire un signal audible dans ce récepteur lorsque l'interrupteur coupe les signaux émis par l'émetteur.

## Claims

1. A telephone set comprising a low output voltage transmitter (2) and a receiver (3) disposed in a hand set (1) connected by a four wire flex (5, 6, 7, 8) to a case (4) comprising supply means (11) and line connection means (10), the hand set also comprising a pre amplifier (12) amplifying the output signal of the transmitter (2) and connected to the supply means (11) by a first (5) and a second (6) conducting wire, the output signal of the pre amplifier being transmitted by the same conducting wires (5, 6) to the case (4), characterized in that it comprises a switch (20) disposed in the hand set for interrupting the transmission of signals by the pre amplifier (12), and signalling means responsive to the position of this switch for producing a signal perceptible by the user when this transmission is interrupted.

2. Telephone set according to claim 1, characterized in that it comprises a modulation separator and amplifier member (15) disposed in the case (4) and connected to the line connection means (10) and to the conducting wires (5, 6).

3. The telephone set according to claim 2, characterized in that it comprises the following elements :

— a manually actuatable switch (20) disposed in the hand set and shunted across the pre amplifier (12) between the first (5) and the second (6) conducting wire ;

— a filter (21) disposed in the case is connected to these conducting wires (5, 6) for determining the main voltage present between these conductors ;

— supply means (11) which comprise an internal impedance (17) producing, when the pre amplifier is connected, a mean voltage drop between the two conducting wires (5, 6) equal to a fraction of the off load-voltage of the supply means ;

— threshold means (22), connected to the output terminals of the filter (21) and producing a signal when their input voltage is less than a pre determined threshold ; and

— signalling means (23, 24, 3), controlled by the threshold means (22) for producing a signal perceived by the user when the threshold means produce an output signal.

4. The telephone set according to claim 2, characterized in that it comprises the following elements :

— a switch (200) disposed in the hand set and connected in series to one of the input terminals of the pre amplifier (12) ;

— a filter (21) disposed in the case and connected to the conducting wires (5, 6) for determining the mean voltage present between these conductors ;

— supply means (11) which comprise an internal impedance (17) producing, when the pre amplifier is connected, a main voltage drop between the two conducting wires (5, 6) equal to a fraction of the off load voltage of the supply means ;

— threshold means (22) connected to the output terminals of the filter (21) and producing a signal when their input voltage is greater than a pre determined threshold ; and

— signalling means (23, 24, 3), controlled by the threshold means for producing the signal perceived by the user when the threshold means produce an output signal.

5. The telephone set according to one of claims 3 or 4, characterized in that the internal impedance (17) of the supply means (11) produces a voltage drop substantially equal to half the off load voltage.

6. The telephone set according to any one of claims 1 to 5, characterized in that the pre amplifier (12) is of the « carrier current » type and is supplied by supply means (11) comprising a voltage source (16) connected in series with a resistor (17).

7. The telephone set according to any one of claims 2 to 6, characterized in that the signalling means comprise an electric signal generator (23) whose output is connected to the receiver (3) of the hand set (1) for producing an audible signal in this receiver when the switch cuts off the signals transmitted by the transmitter.

## Ansprüche

1. Telefonapparat, der einen Sender (2) mit Schwachstromausgang und einen Empfänger (3) aufweist, die in einem Hörer (1) angeordnet sind, der durch ein Kabel mit vier Litzen (5, 6, 7, 8) mit einem Gehäuse (4) verbunden ist, das Versorgungseinrichtungen (11) und Einrichtungen (10) zur Verbindung mit der Leitung enthält, wobei der Hörer gleichzeitig einen Vorverstärker (12) enthält, der das Ausgangssignal des Senders (2) verstärkt und der durch die Zwischenschaltung einer ersten (5) und einer zweiten (6) Leitungslitze mit den Versorgungseinrichtungen (11) verbunden ist, wobei das Ausgangssignal des Vorverstärkers durch die gleichen Leitungslitzen (5, 6) zum Gehäuse (4) übertragen wird, dadurch gekennzeichnet, daß er einen Schalter (20) enthält, der in dem Hörer angeordnet ist, um die Übertragung der Signale durch den Vorverstärker (12) zu unterbrechen und Signaleinrichtungen, die die Stellung des Schalters erfassen, um ein Signal zu erzeugen, das für den Benutzer wahrnehmbar ist, während diese Übertragung unterbrochen ist.

2. Telefonapparat gemäß Anspruch 1, dadurch gekennzeichnet, daß ein Organ zur Demodulation and Verstärkung (15) aufweist, das in dem Gehäuse (4) angeordnet ist und mit Einrichtungen, zur Verbindung mit der Leitung (10) und mit den Leitungslitzen (5, 6) verbunden ist.

3. Telefonapparat gemäß Anspruch 2, dadurch gekennzeichnet, daß er folgende Elemente aufweist :

— einen mit der Hand zu betätigenden Schalter (20), der in dem Hörer angeordnet ist, und der in einer Abzweigung mit dem Vorverstärker (12) zwischen der ersten (5) und der zweiten (6) Leitungslitze angeordnet ist ;

— ein Filter (21), das in dem Gehäuse angeordnet ist und das mit den Leitungslitzen (5, 6) verbunden ist, um die mittlere Spannung, die zwischen diesen Leitungslitzen vorhanden ist, zu bestimmen ;

— Versorgungseinrichtungen (11), die eine interne Impedanz (17) aufweisen, die, wenn der Vorverstärker angeschlossen ist, einen Abfall der Mittleren Spannung zwischen den Leitungslitzen (5, 6) erzeugt, die gleich einem Bruchteil der Leerlaufspannung dieser Versorgungseinrichtungen ist ;

— eine Schwellenwert-Einrichtung (22), die mit den Ausgangsklemmen des Filters (21) verbunden ist, und die ein Signal erzeugt, wenn deren Eingangsspannung kleiner als eine vorbestimmte Schwelle ist ; und

— eine Signal-Einrichtung (23, 24, 3), die durch die Schwellenwert-Einrichtung (22) gesteuert wird, um ein Signal zu erzeugen, das von dem Benutzer wahrgenommen während die Schwellenwert-Einrichtung ein Ausgangssignal erzeugt.

4. Telefonapparat gemäß Anspruch 2, dadurch gekennzeichnet, daß er folgende Elemente enthält :

— einen Schalter (200) der in dem Hörer angeordnet ist und in Serie mit einer der Eingangsklemmen des Vorverstärkers (12) verbunden ist ;

— ein Filter (21), das in dem Gehäuse angeordnet ist und das mit den Leitungslitzen (5, 6) verbunden ist, um die zwischen diesen Leitern vorhandene mittlere Spannung zu bestimmen ;

— Versorgungseinrichtungen (11), die eine interne Impedanz (17) aufweisen, die, während der Vorverstärker angeschlossen ist, einen Abfall der mittleren Spannung zwischen den beiden Leitungslitzen (5, 6) erzeugen, die gleich einem Bruchteil der Leerlaufspannung dieser Versorgungseinrichtungen ist ;

— Schwellenwert-Einrichtung (22), die mit den Ausgangsklemmen des Filters (21) verbunden ist, und die ein Signal erzeugt wenn ihre Eingangsspannung höher als eine vorbestimmte Schwelle ist ; und

— Signal-Einrichtung (23, 24, 3), die von der Schwellenwert-Einrichtung gesteuert wird, um ein Signal zu erzeugen, das von dem Benutzer wahrgenommen wird, während die Schwellenwert-Einrichtungen ein Ausgangssignal erzeugen.

5. Telefonapparat gemäß einem der Ansprüche 3 oder 4, dadurch gekennzeichnet, daß die interne Impedanz (17) der Versorgungseinrichtungen (11) einen Spannungsabfall erzeugt, der gleich der Hälfte der Leerlaufspannung ist.

6. Telefonapparat gemäß einem der Ansprüche 1 bis 5, dadurch gekennzeichnet, daß der Vorverstärker (12) vom Typ « Trägerstrom » ist und daß er durch die Versorgungseinrichtungen (11) versorgt wird, die eine Spannungsquelle (16) enthalten, die in Serie mit einem Widerstand (17) geschaltet ist.

7. Telefonapparat gemäß einem der Ansprüche 2 bis 6, dadurch gekennzeichnet, daß die Signaleinrichtung einen elektrischen Signalgenerator (23) enthält, dessen Ausgang mit dem Empfänger (3) des Hörers (1) verbunden ist, um ein hörbares Signal in diesem Empfänger zu erzeugen, wenn der Schalter die vom Sender ausgesandten Signale unterbricht.

fig. 1